# DEMANDE DE BREVET EUROPEEN

(11) **EP 0 925 973 A1**
(43) Date de publication de la demande: **30.06.1999**
(21) Numéro de dépôt: 98460060.1
(22) Date de dépôt: 18.12.1998
(51) Int. Cl.: B60J 1/20

(54) **Rideau de store à barre de tirage équipée d'une lèvre d'étanchéité à la lumière**

(30) Priorité: 19.12.1997 FR 9716162
(71) Demandeur: Wagon Automotive, 79302 Bressuire Cédex (FR)
(72) Inventeur: Jaulain, Philippe, 79200 Parthenay (FR)
(74) Mandataire: Vidon, Patrice

(57) **Abrégé**

L'invention présente un rideau de store comportant un écran souple (7), une barre de tirage (6) attelée à un bord de l'écran (7), et une lèvre souple d'étanchéité à la lumière (8) équipant le côté de la barre de tirage (6) opposé à l'écran. La lèvre d'étanchéité à la lumière (8) est réalisée en une seule pièce avec l'écran (7), sous la forme d'un voile (3) unique et continu qui déborde de la barre de tirage (6) pour former la lèvre d'étanchéité à la lumière précitée.

## Description

La présente invention concerne de manière générale les stores pare-soleil équipant en particulier les véhicules automobiles, et plus précisément un rideau de store comportant une barre de tirage équipée d'une lèvre d'étanchéité à la lumière.

De manière générale, un store se compose d'un rideau d'occultation et de moyens automatiques ou manuels de déploiement/reploiement de ce rideau en regard d'une baie. Le rideau comporte une partie principale formant écran, qui est constituée par exemple par une simple toile, et dont le bord avant par référence au sens de déploiement est équipé d'une barre de tirage permettant l'actionnement de l'écran avec une tension uniforme. Il existe plusieurs types de stores, avec différents moyens de déploiement/reploiement du rideau.

On connaît par exemple les stores à enrouleur qui comportent un boîtier renfermant un rouleau d'enroulement de l'écran souple qui traverse une fente du boîtier pour pouvoir être déployé à l'extérieur du boîtier selon une direction de déploiement perpendiculaire à l'axe du rouleau d'enroulement. Le rouleau d'enroulement est généralement sollicité par des moyens de rappel élastique, tels qu'un ressort hélicoïdal, exerçant un couple de rappel permanent tendant à l'enroulement de l'écran sur le rouleau.

In situ, le boîtier du store est fixé au voisinage d'un bord d'une baie que l'on souhaite pouvoir occulter (par exemple une vitre de véhicule). Le déploiement du rideau en regard de la baie s'effectue alors par traction (manuelle ou automatique) de la barre de tirage en direction d'un bord opposé de la baie auquel la barre de tirage est, en fin de course, adjacente. Dans cette configuration de déploiement total, on constate toujours en pratique un jour entre la barre de tirage et le bord correspondant de la baie. Ce jour, qui résulte des défauts de montage et de fabrication du store et des éléments de structure associés à la baie, laisse passer la lumière et peut donc être gênant lorsque l'utilisateur souhaite obtenir une occultation totale de la baie.

Pour remédier à cet inconvénient, il a été proposé d'équiper la barre de tirage, de son côté opposé à l'écran, d'une lèvre d'étanchéité à la lumière souple qui, en fin de déploiement, vient en appui contre un élément de structure (par exemple la garniture intérieure d'une portière ou la plage arrière d'un véhicule) associé au bord correspondant de la baie que l'on souhaite occulter. Cette lèvre compense, par sa capacité de déformation, les éventuels défauts de parallélisme et de position de fin de course de la barre de tirage par rapport à l'élément de structure correspondant de la baie, de façon à combler le jour pouvant subsister entre ces derniers.

Actuellement, la lèvre d'étanchéité est réalisée et fixée à la barre de tirage indépendamment de l'écran, lors d'une opération supplémentaire. La fabrication et la fixation de cette lèvre, si simples soient-elles, augmentent le coût de fabrication du rideau et donc du store dans son ensemble.

Le but de l'invention est de concevoir un rideau de store à la barre de tirage équipée d'une lèvre d'étanchéité, dont la fabrication soit particulièrement simple et peu coûteuse.

En vue de la réalisation de ce but, on prévoit selon l'invention un rideau de store comportant un écran souple, une barre de tirage attelée à un bord de l'écran, et une lèvre souple d'étanchéité à la lumière équipant le côté de la barre de tirage opposé à l'écran. La lèvre d'étanchéité à la lumière est réalisée en une seule pièce avec l'écran, sous la forme d'un voile unique et continu qui déborde de la barre de tirage pour former la lèvre d'étanchéité à la lumière précitée.

La barre de tirage est donc simplement rapportée sur le voile en retrait de son bord libre de façon à laisser dépasser une bande d'extrémité qui forme ainsi la lèvre d'étanchéité à la lumière. De cette manière, on réalise la lèvre d'étanchéité et la fixation de la barre de tirage en une seule opération.

Dans un mode de réalisation particulièrement simple et peu coûteux, la barre de tirage comporte deux parties profilées qui coincent entre elles et le voile.

Plus précisément, la barre de tirage comporte d'une part un profilé d'armature rigide présentant deux ailettes formant entre elles un angle, et d'autre part un profilé de recouvrement ayant une section en forme de "C" élastiquement déformable dont les extrémités forment des crochets encliquetables sur les bords des deux ailettes du profilé d'armature.

D'autres caractéristiques et avantages de l'invention apparaîtront à la lecture de la description qui suit d'un mode de réalisation particulier donné à titre d'exemple non limitatif.

Il sera fait référence aux dessins annexés, parmi lesquels :
- la figure 1 est une vue en perspective d'un store à enrouleur pourvu d'un rideau conforme à l'invention;
- la figure 2 est une vue partielle de profil de la partie inférieure du rideau en configuration déployée avec la lèvre d'étanchéité à la lumière en appui contre un élément de structure de la baie à occulter ;
- la figure 3 est une vue partielle en coupe par le plan III de la figure 1 et en perspective de la partie inférieure du rideau, avec la barre de tirage fixée sur le voile ;
- la figure 4 est une vue analogue à la figure 2, montrant les deux parties de la barre de tirage avant leur assemblage sur le voile.

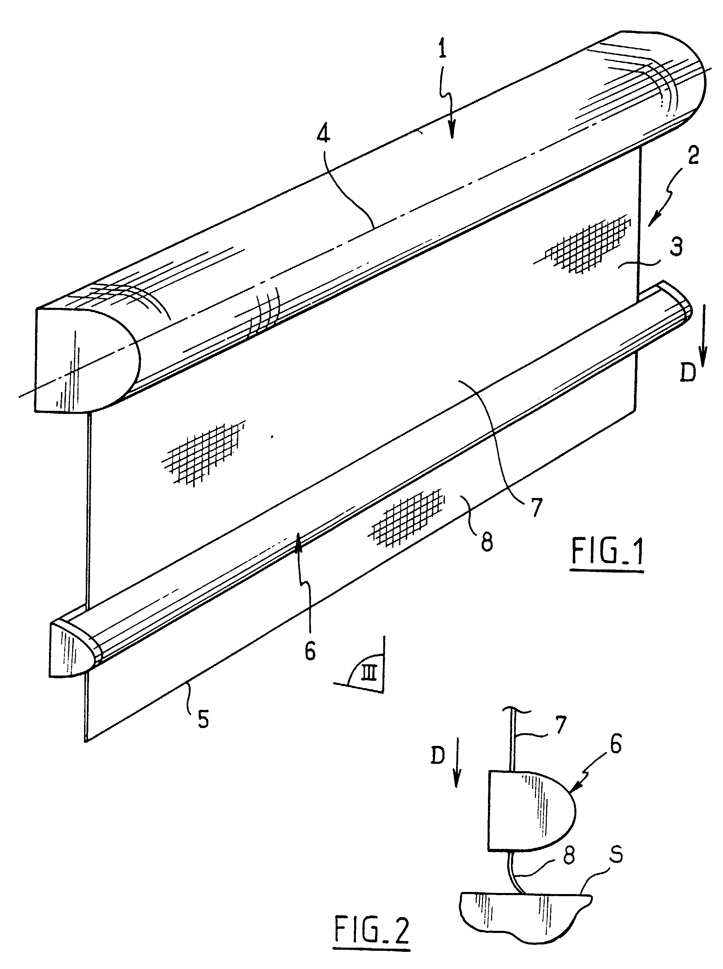

A la figure 1, on a représenté en perspective un store à enrouleur. Ce store à enrouleur comporte un boîtier 1 depuis lequel le rideau 2 peut être déployé. Le rideau 2 est constitué par un voile souple 3 tel qu'une simple toile de forme rectangulaire. Ce voile possède un bord arrière par référence au sens de déploiement D qui est attelé à un rouleau d'enroulement (non visible aux figures) qui est monté dans le boîtier 1 pour tourner autour de son axe 4 de façon à assurer l'enroulement ou le déroulement du voile 3. Classiquement, le rouleau d'enroulement est sollicité par un couple de rappel permanent tendant à un enroulement du voile 3 à l'intérieur du boîtier. Les détails de montage du rouleau d'enroulement et de son mécanisme de rappel sont bien connus dans le domaine de la fabrication des stores à enrouleur et ne seront donc pas davantage décrits.

Au voisinage de son bord opposé, c'est-à-dire de son bord avant 5, le voile 3 est équipé d'une barre de tirage 6. Conformément à l'aspect essentiel de l'invention, cette barre de tirage 6 est disposée en retrait du bord avant 5. La barre de tirage 6 divise ainsi le voile 3 en deux portions : une portion principale 7 qui forme l'écran d'occultation proprement dit et une portion d'extrémité 8 en forme de bande de quelques centimètres de large qui déborde de la barre de tirage 6, du côté opposé à l'écran 3.

Ainsi, en configuration de déploiement complet comme illustré à la figure 2, la bande d'extrémité 8 vient en appui contre une surface S d'un élément de structure associé au bord correspondant de la baie à occulter. Cette surface S peut par exemple être constituée par le rebord supérieur d'une garniture de portière, une plage arrière de véhicule automobile, la bordure d'un châssis de fenêtre de wagon, etc. La bande d'extrémité 8 constitue donc une lèvre d'étanchéité à la lumière qui comble le jour existant entre la barre de tirage 6 et la surface S. Il est ainsi possible, tout en réalisant une occultation complète, de prévoir une position de fin de course de la barre de tirage qui soit suffisamment éloignée de la surface S pour éviter tout contact qui risquerait d'étendre l'écran 3 et de former des plis inesthétiques sur celui-ci, notamment lorsque le rouleau d'enroulement renfermé par le boîtier 1 est motorisé.

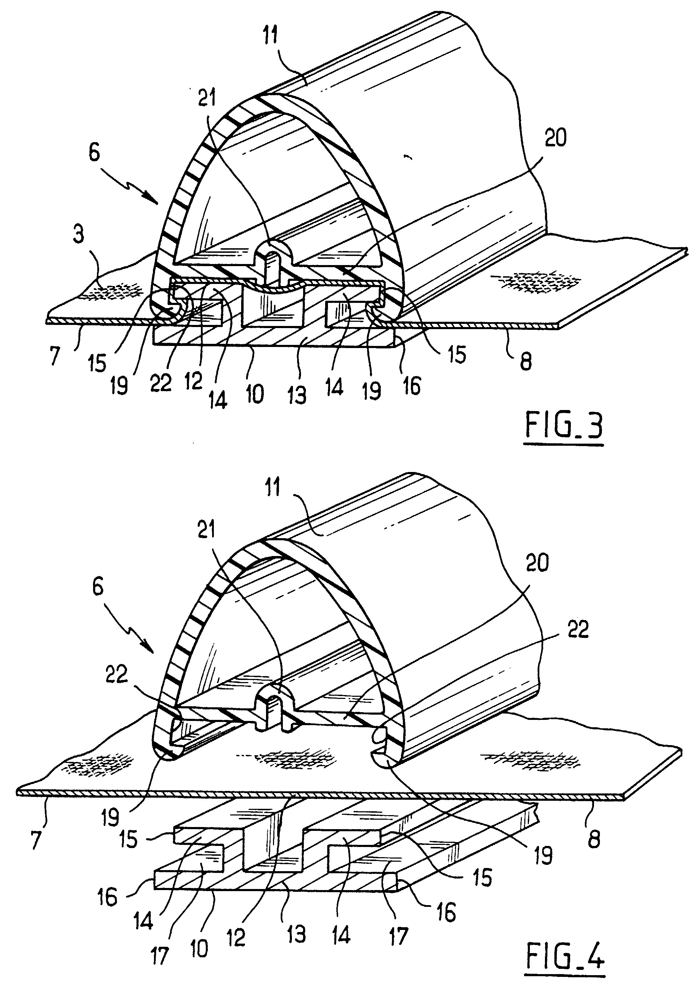

La constitution et le montage de la barre de tirage 6 seront mieux compris en se reportant aux figures 3 et 4. La barre de tirage 6 se compose de deux parties profilées 10, 11 qui coincent entre elles une portion intermédiaire 12 du voile 3 situé entre l'écran 7 et la lèvre 8. Le profilé 10 est rigide et constitue l'armature de la barre de tirage 6. Il est ici réalisé en aluminium. Il présente une section transversale en forme générale de "K" avec une branche principale rectiligne 13 et deux branches secondaires 14 dont les extrémités 15 sont légèrement en retrait par rapport aux extrémités 16 de la branche 13. Les branches 14 délimitent ainsi avec la branche 13 deux encoches latérales 17.

Le second profilé 11 présente quant à lui une section transversale en forme de C dont les deux extrémités forment des crochets 19 encliquetables sur les extrémités 15 des branches 14 du profilé 10. Au voisinage des crochets 19, les deux extrémités de la section transversale du profilé 11 sont reliées par une nervure intérieure 20 qui présente en son milieu un pli 21 en forme de U qui permet à la section du profilé 11 de se déformer élastiquement. Les deux extrémités de la nervure 20 délimitent, avec les crochets 19, des encoches 22 qui sont légèrement plus larges que l'épaisseur des extrémités 15 des branches 14 du profilé 13.

Au montage, comme cela est visible à la figure 3, la partie intermédiaire 12 est prise en sandwich entre les profilés 10 et 11. Le profilé 11, qui est ici réalisé en matière plastique, se déforme élastiquement pour permettre l'encliquetage des crochets 19 sur les extrémités 15 des ailettes 14. La portion intermédiaire 12 du voile 3 est coincée entre les encoches 22 du profilé 11 et les extrémités 15 des branches 14 du profilé 10. De part et d'autre de cette portion intermédiaire 12, le voile 3 est réorienté par les encoches 17 dans le plan de la branche 13 du profilé 10 pour que l'écran 7 et la lèvre 8 soient naturellement situés dans le même plan. Autrement dit, la lèvre 8 est ainsi située dans le prolongement de l'écran 7.

L'invention n'est pas limitée au mode de réalisation qui vient d'être décrit, mais englobe au contraire toute variante reprenant, avec des moyens équivalents, ses caractéristiques essentielles. Par exemple, bien qu'il ait été décrit un rideau utilisé dans un store à enrouleur, il serait également possible d'utiliser ce même rideau conforme à l'invention dans un store dont les moyens de déploiement/reploiement seraient réalisés sous une autre forme. On pourrait par exemple utiliser une barre de rappel mobile en translation et attelée au voile ou glissant contre celui-ci pour former un pli comme décrit dans le brevet français N° 2.740.823.

D'autre part, la constitution de la barre de tirage n'est pas limitée à l'exemple précédemment décrit. On pourrait ainsi prévoir une barre de tirage comprenant deux parties de formes quelconques emboîtables l'une sur l'autre en prenant en sandwich le voile.

## Revendications

1. Rideau de store comportant un écran souple (7), une barre de tirage (6) attelée à un bord de l'écran (7), et une lèvre souple d'étanchéité à la lumière (8) équipant le côté de la barre de tirage (6) opposé à l'écran,
caractérisé en ce que la lèvre d'étanchéité à la lumière (8) est réalisée en une seule pièce avec l'écran (7), sous la forme d'un voile (3) unique et continu qui déborde de la barre de tirage (6) pour former la lèvre d'étanchéité à la lumière précitée.

2. Rideau selon la revendication 1, caractérisé en ce que la barre de tirage (6) comporte deux parties profilées (10, 11) qui coincent entre elles et le voile (3).

3. Rideau selon la revendication 2, caractérisé en ce que la barre de tirage (6) comporte d'une part un profilé d'armature (10) rigide présentant deux ailettes (14) formant entre elles un angle, et d'autre part un profilé de recouvrement (11) ayant une section élastiquement déformable présentant deux extrémités en forme de crochets (19) encliquetables sur les bords (15) des deux ailettes (14) du profilé d'armature (10).

4. Rideau selon la revendication 3, caractérisé en ce que la section du profilé de recouvrement (11) est en forme de C.

5. Store comprenant un rideau de store comportant un écran souple (7), une barre de tirage (6) attelée à un bord de l'écran (7), et une lèvre souple d'étanchéité à la lumière (8) équipant le côté de la barre de tirage (6) opposé à l'écran,
caractérisé en ce que la lèvre d'étanchéité à la lumière (8) est réalisée en une seule pièce avec l'écran (7), sous la forme d'un voile (3) unique et continu qui déborde de la barre de tirage (6) pour former la lèvre d'étanchéité à la lumière précitée.

6. Procédé de fabrication d'un store comprenant un rideau de store comportant un écran souple (7), une barre de tirage (6) attelée à un bord de l'écran (7), et une lèvre souple d'étanchéité à la lumière (8) équipant le côté de la barre de tirage (6) opposé à l'écran,
caractérisé en ce qu'il comprend une étape de mise en place de ladite barre de tirage (6) sur une portion intermédiaire dudit rideau, de façon que la lèvre d'étanchéité à la lumière (8) soit réalisée en une seule pièce avec l'écran (7), sous la forme d'un voile (3) unique et continu qui déborde de la barre de tirage (6) pour former la lèvre d'étanchéité à la lumière précitée.
